# EUROPEAN PATENT APPLICATION

(11) **EP 1 990 819 A2**
(43) Date of publication of application: **12.11.2008**
(21) Application number: 08155668.0
(22) Date of filing: 06.05.2008
(51) Int. Cl.: H01J 1/304, C01B 31/02

(54) **Hybrid composite including carbon nanotube and carbide-derived carbon, electron emitter including the hybrid composite, method of preparing the electron emitter, and electron emission device including the electron emitter**

(30) Priority: 10.05.2007 KR 20070045413
(71) Applicant: Samsung SDI Co., Ltd., Suwon-si Gyeonggi-do (KR)
(72) Inventor: Kim, Yoon-Jin, Gyeonggi-do (KR); Kim, Jae-Myung, Gyeonggi-do (KR); Moon, Hee-Sung, Gyeonggi-do (KR); Zang, Dong-Sik, Gyeonggi-do (KR)
(74) Representative: Hengelhaupt, Jürgen

(57) **Abstract**

Provided are a hybrid composite including a carbon nanotube and a carbide-derived carbon, an electron emitter including the hybrid composite, and a method of preparing the electron emitter, and an electron emission device including the electron emitter. Specifically, provided are a hybrid composite including a carbon nanotube and a carbide-derived carbon prepared by thermochemically reacting a carbide compound with a halogen group element-containing gas so that all of the elements except for carbon, constituting the carbide compound, are extracted, an electron emitter including the hybrid composite, and a method of preparing the electron emitter, and an electron emission device including the electron emitter. Since the carbon nanotube and the carbide-derived carbon are hybridized and composited, a screen effect that may occur when a great amount of carbon nanotubes are used can be prevented, and an electron emitter including the hybrid composite has excellent electron emission capability, excellent uniformity, and long lifetime.

## Description

### BACKGROUND OF THE INVENTION

### 1. Field of the Invention

The present invention relates to a hybrid composite including a carbon nanotube and a carbide-derived carbon, an electron emitter including the hybrid composite, a method of preparing the electron emitter, and an electron emission device including the electron emitter, and more particularly, to a hybrid composite in which a carbon nanotube and a carbide-derived carbon are hybridized and composited, an electron emitter including the hybrid composite, which prevents a screen effect due to use of a great amount of carbon nanotubes, and has excellent brightness uniformity, and a long lifetime, a method of preparing the electron emitter, and an electron emission device including the electron emitter.

### 2. Description of the Related Art

In general, electron emission devices are categorized into an electron emission device including a hot cathode as an electron emitter and an electron emission device including a cold cathode as an electron emitter. Examples of the electron emission device including a cold cathode as an electron emitter include a field emitter array (FEA)-type electron emission device, a surface conduction emitter (SCE)-type electron emission device, a metal insulator metal (MIM)-type electron emission device, a metal insulator semiconductor (MIS)-type electron emission device, a ballistic electron surface emitting (BSE)-type electron emission device, and the like.

In electron emission devices described above, an electron emitter that emits electrons may be formed of a carbonaceous material, such as a carbon nanotube that has an excellent conductivity, an excellent field enhancement effect, and an excellent field emission property, and a low work function, which is disclosed in Korean Laid-open Patent Publication No. 2005-0024674.

However, even when a carbon nanotube is vertically oriented in an electron emission device, electron emission may not occur, or electron emission performance may be decreased due to a screen effect caused by adjacent carbon nanotubes. Such results may be due to an incomplete ohmic contact between carbon nanotubes and an electrode. In general, a carbon nanotube has a shape of a fiber, and such a fiber-shaped carbon nanotube has a large field enhancement factor (β). The fiber-shaped material has problems in terms of uniformity and a lifetime.

### SUMMARY OF THE INVENTION

The present invention provides a hybrid composite which can be used to prepare an electron emitter which prevents a screen effect due to use of a great amount of carbon nanotubes, and has excellent brightness uniformity, and a long lifetime, an electron emitter including the hybrid composite, a method of preparing the electron emitter, and an electron emission device including the electron emitter.

According to an aspect of the invention there is provided hybrid composite comprising:
a carbon nanotube; and
a carbide-derived carbon prepared by thermochemically reacting a carbide compound with a halogen or a halogen compound containing gas so as to extract the elements of the carbide except carbon, wherein a weight ratio of the carbon nanotube with respect to the carbide-derived carbon in the hybrid composite is in the range from 0.0001 to 5.

The hybrid composite may further comprise a binder. Preferably, the binder is a copolymer of a carboxylic group-containing monomer and at least one ethylene-containing unsaturated monomer. The carboxylic group-containing monomer may be at least one material selected from the group consisting of an acrylic acid, a methacrylic acid, a fumaric acid, a maleic acid, vinyl acetic acid, and anhydrides thereof; and an ethylene-containing unsaturated monomer may be at least one material selected from the group consisting of methylacrylate, methylmethacrylate, ethylacrylate, ethylmethacrylate, butylacrylate, butylmethacrylate, 2-hydroxyethylacrylate, 2-hydroxyethylmethacrylate, ethyleneglycolmonomethyletheracrylate, ethyleneglycolmonomethylethermethacrylate, glycidylmethacrylate, 3,4-epoxycyclohexylmethylmethacrylate, and 3,4-epoxycyclohexylmethylacrylate. Preferably, an amount of the binder is in the range from 5 to 40 wt%. Preferably, the binder is crosslinked by a crosslinking agent selected from the group consisting of diacrylates, triacrylates, tetraacylates, and hexaacrylates.

According to another aspect of the invention there is provided a method of preparing an electron emitter on a substrate. The method comprises the steps of:
preparing a hybrid composite composition by stirring a carbon nanotube, a carbide-derived carbon prepared by thermochemically reacting a carbide compound with a halogen or a halogen compound containing gas so as to extract the elements of the carbide except carbon, and a binder, wherein a weight ratio of the carbon nanotube with respect to the carbide-derived carbon in the hybrid composite is in the range from 0.0001 to 5;
ejecting the hybrid composite composition on a substrate; and
sintering the substrate including the ejected hybrid composite composition to prepare the electron emitter.

Preferably, the binder is a copolymer of a carboxylic group-containing monomer and at least one ethylene-containing unsaturated monomer. The carboxylic group-containing monomer may be at least one material selected from the group consisting of an acrylic acid, a methacrylic acid, a fumaric acid, a maleic acid, vinyl acetic acid, and anhydrides thereof; and an ethylene-containing unsaturated monomer may be at least one material selected from the group consisting of methylacrylate, methylmethacrylate, ethylacrylate, ethylmethacrylate, butylacrylate, butylmethacrylate, 2-hydroxyethylacrylate, 2-hydroxyethylmethacrylate, ethyleneglycolmonomethyletheracrylate, ethyleneglycolmonomethylethermethacrylate, glycidylmethacrylate, 3,4-epoxycyclohexylmethylmethacrylate, and 3,4-epoxycyclohexylmethylacrylate. An amount of the binder may be in the range from 5 to 40 wt% with respect to the total amount of the hybrid composite composition. The binder may be crosslinked by a crosslinking agent selected from the group consisting of diacrylates, triacrylates, tetraacylates, and hexaacrylates.

Preferably, the hybrid composite composition contains the monomers of the binder, respectively the crosslinking agent, and the monomers are copolymerized, respectively crosslinked by the crosslinking agent, to prepare the binder. The hybrid composite composition may then further comprise a photoinitiator selected from the group consisting of benzophenone, methyl o-benzoylbenzoate, 4,4-bis(dimethylamino)benzophenon, 4,4-bis(diethylamino)benzophenon, 2,2-diethoxyacetophenon, 2,2-dimethoxy-2-phenylacetophenon, 2-methyl-[4-(methylthio)phenyl]-2-morpholinopropan-1-on, 2-benzyl-2-dimethylamino-1-(4-morpholinophenyl)-1-butanon, bis(2,6-dimethoxybenzoyl)-2,4,4-trimethylpentylphosphineoxide, and bis(2,4,6-trimethylbenzoyl)phenylphosphineoxide.

The hybrid composite composition may further comprise an organic solvent selected from the group consisting of ethylcarbitol, butylcarbitol, ethylcarbitolacetate, butylcarbitolacetate, texanol, terpene oil, dipropyleneglycolmethylether, dipropyleneglycolethylether, dipropyleneglycolmonomethyletheracetate, γ-butyrolactone, cellosolveacetate, butylcellosolveacetate, and tripropyleneglycol.

According to another aspect of the present invention, there is provided an electron emitter, especially an electron emitter for a cold cathode, prepared using the before mentioned method or consisting of the before mentioned hybrid composite.

According to another aspect of the present invention, there is provided an electron emission device including the electron emitter.

### BRIEF DESCRIPTION OF THE DRAWINGS

The above and other features and advantages of the present invention will become more apparent by describing in detail exemplary embodiments thereof with reference to the attached drawings in which:
FIG. 1 is a partial sectional view of an electron emission device;
FIGS. 2A and 2B are pictorial views showing a scanning electron microscopic (SEM) image and a transmission electron microscopic (TEM) image of a carbide-derived carbon included in a hybrid composite, respectively;
FIG. 3 is a graphical view showing Raman spectrum analysis result of a carbide-derived carbon included in a hybrid composite;
FIGS. 4 and 5 are graphical view showing X-ray diffraction spectra of a carbide-derived carbon included in a hybrid composite;
FIG. 6 is a schematic view of a crystalline structure of graphite;
FIG. 7 is a graphical view showing an X-ray diffraction spectrum of a crystalline graphite;
FIG. 8 is a pictorial view showing a TEM image of a carbide-derived carbon included in a hybrid composite containing a halo pattern;
FIG. 9 is a pictorial view showing a light emitting image of an electron emission device;
FIG. 10 is a graphical view of a current density with respect to an electric field of an electron emission device; and
FIG. 11 is a graphical view of a current density with respect to time of an electron emission device.

### DETAILED DESCRIPTION OF THE INVENTION

The present invention will now be described more fully with reference to the accompanying drawings, in which exemplary embodiments of the invention are shown.

A hybrid composite according to the present invention includes a carbon nanotube, and a carbide-derived carbon prepared by thermochemically reacting a carbide compound with a halogen or a halogen compound containing gas so as to extract the elements of the carbide except carbon. In particular, the carbide-derived carbon is prepared by thermochemically reacting a carbide compound with a halogen group element-containing gas so that all of the elements except for carbon, constituting the carbide compound, are extracted.

In a typical electron emission device, a carbon nanotube that is an electron emitter is vertically grown to improve an electron emission capability. However, even when a carbon nanotube is vertically oriented, electron emission may not occur. In addition, when a great amount of carbon nanotubes are used, a screen effect may occur due to adjacent carbon nanotubes and thus, an electron emission performance may decrease. Such phenomena may occur due to an incomplete ohmic contact between a carbon nanotube and an electrode. It now has been found that a screen effect between carbon nanotubes could be prevented by hybridizing and compositing a carbon nanotube and a carbide-derived carbon that is a conductive material together. It was also found that a processibility, such as dispersibility, in a process of manufacturing an electron emitter could be improved using a hybrid composite including a carbide-derived carbon, and an electron emission device that is a final product had a longer lifetime.

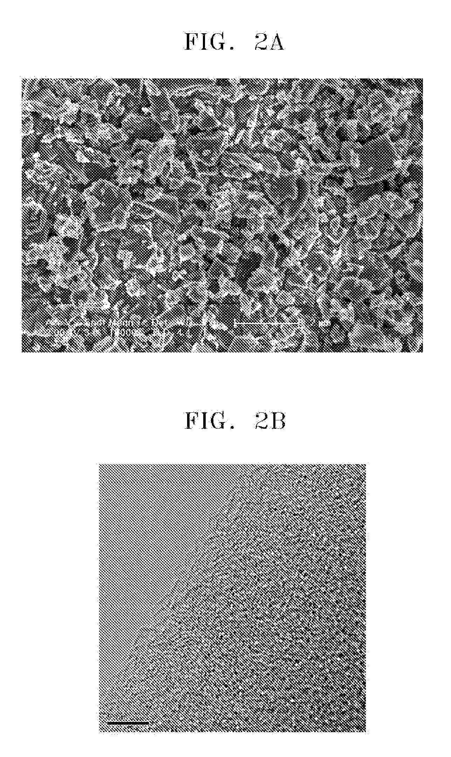

FIGS. 2A and 2B are the scanning electron microscopic (SEM) image and transmission electron microscopic (TEM) image of a carbide-derived carbon included in a hybrid composite, respectively. The carbide-derived carbon can be prepared by thermochemically reacting a carbide compound with a halogen group element-containing gas so that all of the elements except for carbon, constituting the carbide compound, are extracted.

For example, a carbide-derived carbon can be prepared by forming a workpiece with a predetermined transport porosity in particles of a carbide compound, and forming nanopores in the workpiece by performing a thermochemical treatment at a temperature ranging from 350°C to 1200°C in a medium of a gaseous halogen so that all of the elements except for carbon, constituting the workpiece, are extracted, which is disclosed in Korean Laid-open Patent Publication No. 2001-13225.

Specifically, the carbide compound used to prepare a carbide-derived carbon of a hybrid composite may be a compound of carbon and at least one atom of Group IIA, Group IIIA, Group IVA, Group IVB or GroupVIB. Specific example of atom of Group IIA in the periodic table includes Ca, that of Group IIIA includes Al, that of Group IVA includes Si, that of Group IVB includes Ti and Zr, and that of Group VIB includes Mo and W. Such a carbide compound can be a diamond-based carbide, such as silicon carbide or boron carbide; a carbide, such as titanium carbide or zirconium carbide; a salt-based carbide, such as aluminum carbide or calcium carbide; a complex carbide, such as titanium-tantalum carbide or molybdenum-tungsten carbide; a carbonitride, such as titanium carbonitride or zirconium carbonitride; or a blend thereof. Among these compounds described above, when silicon carbide, boron carbide, aluminum carbide, or a blend thereof is used, the carbide-derived carbon can be produced in high yield, and an electron emission device manufactured using the carbide-derived carbon has an excellent emission performance, and long lifetime.

When the carbide-derived carbon of the hybrid composite is prepared using a silicon carbide represented by SiₓC_{y}, a mole ratio of y to x may be in the range from 0.95 to 1.05, which is desired in terms of stoichiometry and structural stability. When the carbide-derived carbon of the hybrid composite is prepared using a boron carbide represented by B_{x'}C_{y'}, a mole ratio of y' to x' may be in the range from 0.24 to 0.26, which is desired in terms of stoichiometry and structural stability. When the carbide-derived carbon of the hybrid composite is prepared using a silicon aluminium carbide represented by Al_{x"}C_{y"}, a mole ratio of y" to x" may be in the range from 0.74 to 0.76, which is desired in terms of stoichiometry and structural stability.

The halogen group element-containing gas may be Cl₂ gas, TiCl₄ gas, or F₂ gas.

Specifically, a carbide-derived carbon being characterized in that with respect to a Raman spectrum analysis (measured under analysis conditions of Ar 514.5nm, 2mW, 60sec (twice), and 50x), an intensity ratio of a disordered-induced D band at 1350cm⁻¹ to a graphite G band at 1590cm⁻¹ is in the range from 0.2 to 5, a carbide-derived carbon being characterized in that with respect to an X-ray diffraction analysis results, there is a weak peak or wide single peak of a graphite (002) surface at 2θ = 25, or a carbide-derived carbon being characterized in that with respect to transmission electron microscopic analysis results, there is a halo-pattern of an amorphous carbon has excellent electron emission properties. Another exemplary carbide-derived carbon material has a specific surface area of 500 to 1400 m²/g, and in one embodiment has a specific surface area ranging from 700 to 1000 m²/g.

In general, Raman spectrum analysis results, X-ray diffraction analysis results, and electron microscopic analysis results are usually used to measure a degree of crystallization. Accordingly, the carbide-derived carbon having such results described above may have a structural characteristic similar to an amorphous carbon having a degree of crystallization in a short range order. It has been reported that an amorphous carbon having a degree of crystallinity in a short range order has a mixed structure of a bent graphite sheet and open pores having a non-6-membered ring structure (Enn Lust et al., J. electroanalytical Chem., vol. 586, pp 247, 2006). It is assumed that the carbide-derived carbon disclosed in the reference described emits fields from open pores having a non-6-membered ring structure which is perpendicular to a surface of the carbide-derived carbon.

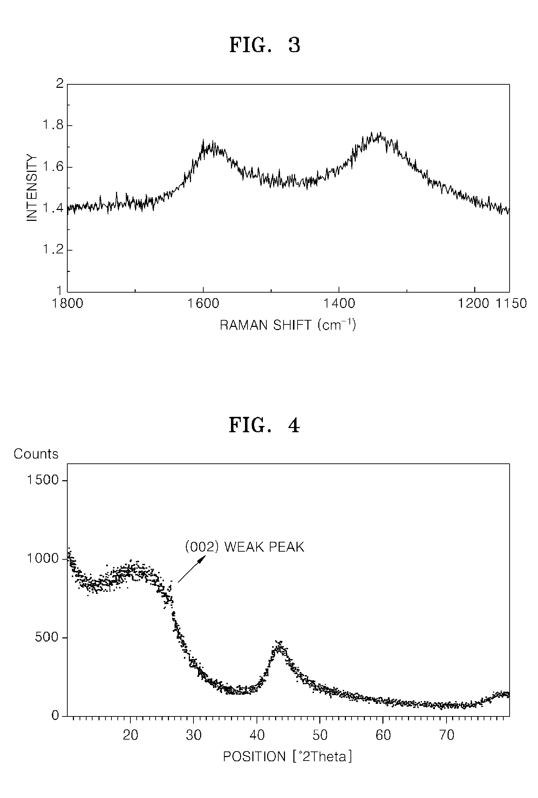

FIG. 3 shows results of Raman spectrum analysis of a carbide-derived carbon included in a hybrid composite according to an embodiment of the present invention performed under conditions (Ar 514.5 nm, 2 mW, 60sec (twice), 50x). Referring to 3, the intensity of a disordered-induced D band at 1350cm⁻¹ is about 1.75, and the intensity of a graphite G band at 1590cm⁻¹ is about 1.70. As a result, a ratio of the intensity of a graphite G band at 1590cm⁻¹ to the intensity of a disordered-induced D band at 1350cm⁻¹ (I_{G}/I_{D}) is about 0.97.

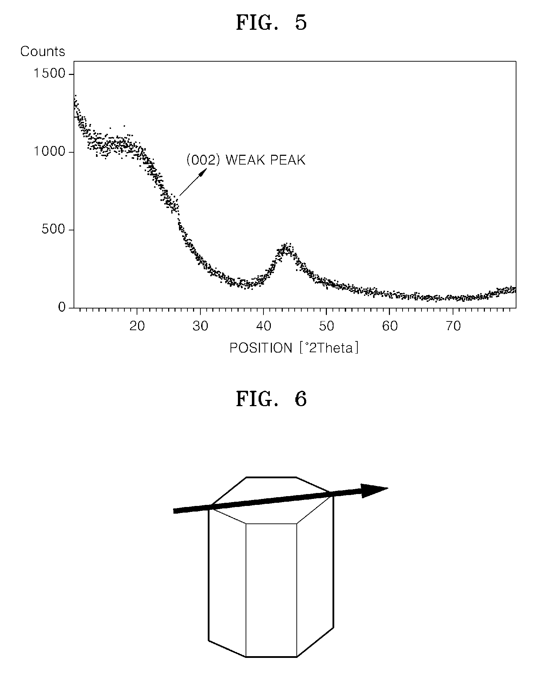

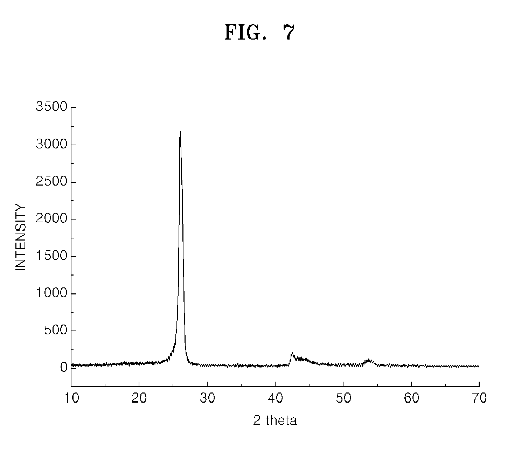

FIGS. 4 and 5 are X-ray diffraction spectra of a carbide-derived carbon included in a hybrid composite. Referring to FIGS. 4 and 5, in the X-ray diffraction spectra of the carbide-derived carbon, a weak peak of graphite (002) surface is present at 2θ = 25°. If the crystalline structure of graphite is supposed to be hexagonal, the peak of the graphite (002) surface, as illustrated in FIG. 6, may be formed by diffraction of an X ray irradiating in parallel with respect to an upper surface of the hexagonal structure of the graphite. As illustrated in FIG. 7, a typical crystalline graphite shows a very strong peak at 2θ = 25°. However, the carbide-derived carbon included in a hybrid composite shows a very weak peak at 2θ = 25°. Accordingly, it is identified that the carbide-derived carbon included in a hybrid composite has an amorphous property different from the crystalline graphite.

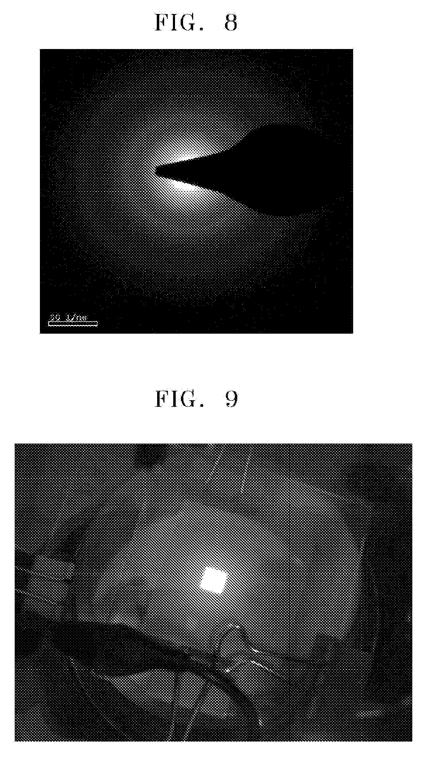

FIG. 8 is a TEM image of the carbide-derived carbon included in a hybrid composite, including a carbide induced halo-pattern. An electron diffraction pattern of a crystalline carbon has such a shape that a plurality of spots are dispersed, on the other hand, an electron diffraction pattern of the carbide-derived carbon has the shape of a gentle circle, that is, an electron diffraction pattern of the carbide-derived carbon is a halo-pattern of an amorphous carbon. Accordingly, it is identified that the carbide-derived carbon has an amorphous property different from a crystalline carbon.

A carbon nanotube included in the hybrid composite can be a commercially available material for an electron emitter. Examples of the carbon nanotube include allotropes of carbon that have a tube-like shape formed of a sheet of graphite rolled up with diameter of a nanometer, such as a single wall nanotube and a multi wall nanotube. The carbon nanotube used in the embodiment of the present invention can be prepared by CVD, such as thermal chemical vapor deposition (CVD), DC plasma CVD, RF plasma CVD, or microwave plasma CVD.

In the hybrid composite, the carbide-derived carbon is hybridized with a carbon nanotube. The weight ratio of the carbon nanotube to the hybridized carbide-derived carbon may be in the range from 0.0001 to 5, preferably 0.001 to 2. When the weight ratio of the carbon nanotube to the hybridized carbide-derived carbon is less than 0.001 wt%, a conductive network may be insufficiently formed and when a triode operates, an operating voltage may increase. On the other hand, the weight ratio of the carbon nanotube to the hybridized carbide-derived carbon is greater than 2 wt%, viscosity may be too high that processibility may deteriorate and uniform emission cannot be obtained. In addition, the amount of the carbon nanotube used can be reduced since the carbide-derived carbon is hybridized together with the carbon nanotube, and thus, dispersibility can be improved in a process of preparing an electron emitter.

A method of preparing an electron emitter made of the hybrid composite on a substrate will now be described in detail.

First, a hybrid composite mixture is prepared by mixing a carbon nanotube, a carbide-derived carbon prepared by thermochemically reacting a carbide compound with a halogen group element-containing gas so that all of the elements except for carbon, constituting the carbide compound, are extracted, and a binder.

A carbide-derived carbon and carbon nanotube used in the method of preparing an electron emitter is the carbide-derived carbon described above and the carbon nanotube described above.

The hybrid composite composition used in the method of preparing an electron emitter supports controlling printability and viscosity, and includes a binder. In some embodiments of the method the hybrid composite composition includes monomers for preparing the binder and, optionally, a crosslinking agent and a photoinitiator. The hybrid composite composition may further include a solvent.

The binder may be a copolymer of a carboxylic group-containing monomer and at least one ethylene-containing unsaturated monomer, and allows the hybrid composite to be developed with a proper viscosity. In the hybrid composite composition , the amount of the binder may be in the range from 5 to 40 wt%. When the amount of the binder is outside this range, the developability may be decreased or a degree of shrinkage in a sintering process may be increased.

The carboxylic group-containing monomer may include at least one material selected from the group consisting of an acrylic acid, a methacrylic acid, a fumaric acid, a maleic acid, vinyl acetic acid, and anhydrides thereof. The ethylene-containing unsaturated monomer may include at least one material selected from the group consisting of methylacrylate, methylmethacrylate, ethylacrylate, ethylmethacrylate, n-butylacrylate, n-butylmethacrylate, isobutylacrylate, isobutylmethacrylate, 2-hydroxyethylacrylate, 2-hydroxyethylmethacrylate, ethyleneglycolmonomethyletheracrylate, and ethyleneglycolmonomethylethermethacrylate. The binder can be also a polymer that contains a crosslinkable group The ethylene-containing unsaturated compound may then be selected from the group consisting of glycidylmethacrylate, 3,4-epoxycyclohexylmethylmethacrylate, and 3,4-epoxycyclohexylmethylacrylate.

Although the binder can be prepared using the copolymer alone, at least one material selected from the group consisting of cellulose, hydroxymethylcellulose, hydroxyethylcellulose, carboxymethylcellulose, carboxyethylcellulose, and carboxyethylmethylcellulose can be mixed with the copolymer to prepare the binder in order to improve developabiltiy.

The crosslinking agent can be a single-functional monomer or a multi-functional monomer. In general, the crosslinking agent is a multi-functional monomer due to excellent exposure sensitivity of the multi-functional monomer. Examples of the multi-functional monomer include diacrylates, such as ethylene glycol diacrylate(EGDA); triacrylates, such as trimethylolpropane triacrylate(TMPTA), trimethylolpropanethoxylatetriacrylate(TMPEOTA), or pentaerythritoltriacrylate(PETA); tetraacylates, such as tetramethylolpropane tetraacrylate, or pentaerythritoltetraacrylate; and hexaacrylates, such as dipentaerylthritol hexaacrylate(DPHA). In the hybrid composite composition, the amount of the crosslinking agent may be in the range from 5 to 30 wt%. When the amount of the crosslinking agent is less than 5 wt%, exposure sensibility of a composition including the hybrid composite may decrease. On the other hand, when the amount of the crosslinking agent is greater than 30 wt%, the viscosity of the composition including the hybrid composite may be decreased and thus printability may deteriorate.

The photoinitiator may include at least one material selected from the group consisting of benzophenone, methyl o-benzoylbenzoate, 4,4-bis(dimethylamino)benzophenon, 4,4-bis(diethylamino)benzophenon, 2,2-diethoxyacetophenon, 2,2-dimethoxy-2-phenylacetophenon, 2-methyl-[4-(methylthio)phenyl]-2-morpholinopropan-1-on, 2-benzyl-2-dimethylamino-1 -(4-morpholinophenyl)-l -butanon, bis(2,6-dimethoxybenzoyl)-2,4,4-trimethylpentylphosphineoxide, and bis(2,4,6-trimethylbenzoyl)phenylphosphineoxide. In the hybrid composite composition, the amount of the photoinitiator may be in the range from 1 to 10 wt%. When the amount of the photoinitiator is less than 1 wt%, the exposure sensitivity of the composition including the hybrid composite may be decreased. On the other hand, when the amount of the photoinitiator is greater than 10 wt%, developability may deteriorate.

The solvent can be any solvent that dissolves the binder and/or the monomers, crosslinking agent and the photoinitiator for preparation of the binder. The solvent may have a boiling point of 150°C or higher. When the boiling point of the solvent is lower than 150°C, the solvent may evaporate too quickly in the process of preparing the composition including the hybrid composite, specifically in a 3-roll mill process, and printability may deteriorate since the solvent may evaporate too quickly in a printing process. An available solvent complying with such requirements may include at least one material selected from the group consisting of ethylcarbitol, butylcarbitol, ethylcarbitolacetate, butylcarbitolacetate, texanol, terpene oil, dipropyleneglycolmethylether, dipropyleneglycolethylether, dipropyleneglycolmonomethyletheracetate, y-butyrolactone, cellosolveacetate, butylcellosolveacetate, and tripropyleneglycol. In the hybrid composite composition, the amount of the solvent may be in the range from 30 to 80 wt%. When the amount of the solvent is less than 30 wt%, the composition has too high viscosity, and thus printability of the composition may deteriorate. On the other hand, when the amount of the solvent is greater than 80 wt%, the composition has too low viscosity, printability of the composition may deteriorate.

The hybrid composite composition may further include a plasticizer to control a dry speed and provide flexibility to the composition. The amount of the plasticizer may be in the range from 0 to 10 wt% based on 100 wt% of the hybrid composite composition. The plasticizer can be dioctylphthalate, diisooctylphthalate, butylbenzylphthalate, dibutylphthalate, dicaprylphthalate, or a combination thereof in a predetermined mixture ratio.

Furthermore, the hybrid composite composition may further include a sensitizer that improves sensitivity, a polymerization inhibitor and antioxidant that improve maintenance of the composition, an ultraviolet absorber that improves resolution, anti-foaming agent that reduces foams in the composition, a dispersant that improves dispersibility, a leveling agent that improves a planarization property in a printing process, and the like.

A hybrid composite composition may be prepared by mixing the carbide-derived carbon, a carbon nanotube, and any of the before mentioned further compounds of the hybrid composite composition and then stirring the resultant mixture by mechanical stirring, an ultrasound treatment, 3-roll milling, ball milling, or sand milling until a homogenous composition is obtained. At this time, the stirring process can be performed 8 times. Alternatively, the composition including the hybrid composite can be prepared by mixing a carbide-derived carbon, a carbon nanotube, and an organic solvent, adding other additives, such as a binder or the monomers of the binder and a photoinitiator, to the mixture, and then stirring the resultant mixture.

Then, the hybrid composite composition is printed on a substrate. An electron emitter according to the present invention can be prepared using a conventional inkjet method. Meanwhile, the term "substrate" herein refers to a substrate on which an electron emitter is to be formed, and can be different according to an electron emission device to be produced, which is easily acknowledged by those of ordinary skill in the art. For example, when the electron emission device to be produced includes a cathode, an anode, and a gate electrode disposed between the cathode and the anode, the term "substrate" can be a cathode.

The hybrid composite composition printed as described above is subjected to a sintering process. Through the sintering process, an adhesive force between the hybrid composite and the substrate can be improved and some of the additives may evaporate, e.g. the solvent. The sintering temperature may be determined in consideration of evaporating temperature and time of preparation. Typically, the sintering temperature may be in the range from 400 to 500°C, preferably 450°C. When the sintering temperature is less than 400°C, the additives, especially the solvent may insufficiently evaporate. On the other hand, when the sintering temperature is higher than 500°C, the manufacturing costs may increase and the substrate can be damaged. Further, in case of providing a hybrid composite composition including the monomers of the binder, respectively a crosslinking agent, copolymerization, respectively crosslinking, may be initiated or completed along with the sintering process.

The sintering process may be preformed in an inactive gas to prevent deterioration of a carbonaceous material. The inactive gas can be nitrogen gas, argon gas, neon gas, xenon gas, or a mixture gas of at least two of aforementioned gases.

The present invention provides an electron emitter prepared as described above, and an electron emission device including the electron emitter.

An electron emission device including an electron emitter according to an embodiment of the present invention includes a first substrate, a cathode and an electron emitter which are disposed on the first substrate, a gate electrode electrically insulated from the cathode, and an insulating layer which is disposed between the cathode and the gate electrode and insulates the cathode from the gate electrode. At this time, the electron emitter includes the hybrid composite described above.

The electron emission device may have various structures. For example, the electron emission device may further include a second insulating layer covering an upper portion of the gate electrode, and a focusing electrode which is insulated from the gate electrode by the second insulating layer and disposed in parallel with respect to the gate electrode.

The electron emission device may be used in various electron devices, specifically, vacuum electron devices, such as a flat panel display, a television, an X-ray tube, an emission gate amplifier, and the like.

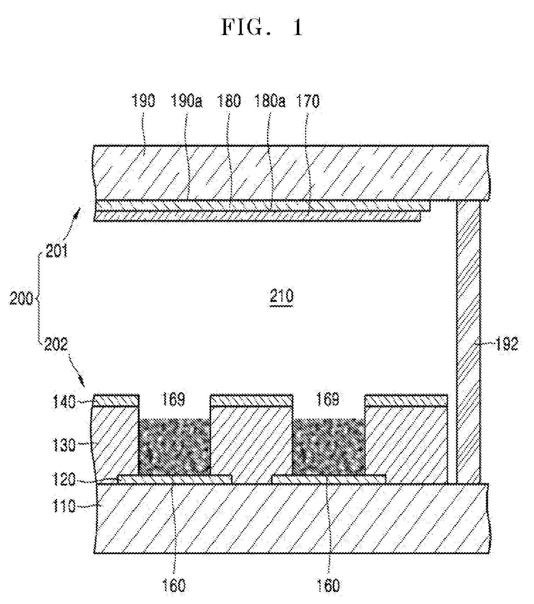

FIG. 1 is a partial sectional view of an electron emission device 200 according to an embodiment of the present invention, specifically a triode-structured electron emission device.

Referring to FIG. 1, the electron emission device 200 includes a top panel 201 and a bottom panel 202. The top panel 201 includes a top surface substrate 190, an anode 180 disposed on a lower surface 190a of the top surface substrate 190, and a phosphor layer 170 disposed on a lower surface 180a of the anode 180.

The bottom panel 202 includes a bottom surface substrate 110 which faces, is disposed in parallel with respect to, and is separated from the top surface substrate 190 in a predetermined interval, such that an inner space is formed, a cathode 120 disposed in a stripe shape on the bottom surface substrate 110, a gate electrode 140 disposed perpendicular to the cathode 120 in a stripe shape, an insulating layer 130 disposed between the gate electrode 140 and the cathode 120, an electron emitter hole 169 formed in portions of the insulating layer 130 and gate electrode 140, and an electron emitter 160 which is disposed in the electron emitter hole 169, electrically connected to the cathode 120, and is disposed lower than the gate electrode 140.

The top panel 201 and the bottom panel 202 are maintained by vacuum that is lower pressure than the atmosphere and a spacer 192 supporting a pressure between the top panel 201 and the bottom panel 202 generated by the vacuum and partitioning an emission space 210 is disposed between the top panel 201 and the bottom panel 202. The anode 180 provides a high voltage required to accelerate electrons emitted from the electron emitter 160 so that electrons can collide with the phosphor layer 170 at high speeds. The phosphor layer 170 is excited by the electrons and the energy level of the phosphor layer 170 is decreased from high energy level to a low energy level, emitting visible light. With respect to an electron emission device for creating color images, a red phosphor layer, a green phosphor layer, and a blue phosphor layer together constituting a unit pixel are disposed on the lower surface 180a of the anode 180 in each of a plurality of emission spaces 210.

The gate electrode 140 promotes easy emission of electrons from the electron emitter 160, and the insulating layer 130 partitions the electron emitter hole 169, and insulates the electron emitter 160 from the gate electrode 140. The electron emitter 160 that emits electrons by field formation includes the hybrid composite as described above.

The electron emission device according to the present invention can be used as a backlight unit of a liquid crystalline display device. The liquid crystalline display device typically includes a liquid crystalline panel assembly and a backlight unit providing light to the liquid crystalline panel assembly. The liquid crystalline panel assembly can form a predetermined image by transmitting or blocking light provided from the backlight unit.

The present invention will be described in further detail with reference to the following examples.

### Manufacture Example 1: Preparation of Carbide-Derived Carbon

100 g of α-SiC having an average particle size of 0.7µm that is a carbon precursor was thermochemically reacted with Cl₂ gas flowing at a flow rate of 3ℓ per minute at 1100°C in a high-temperature electric furnace including a graphite reaction chamber and a transformer, so that Si was extracted from the carbon precursor. As a result, 30 g of a carbide-derived carbon was prepared.

FIGS. 2A and 2B are a SEM image and TEM image of the carbide-derived carbon prepared as described above.

### Example 1: Preparation of Electron Emitter

### (1) Preparation of Hybrid Composite Composition

0.5 g of the carbide-derived carbon obtained according to Manufacture Example 1, 1.0 g of carbon nanotube, 37.5 g of poly(methyl methacrylate-co-methacrylic acid) copolymer (mole ratio of methyl methacrylate to methacrylic acid: 3:1, Mw = 12.000 g/mol) as a binder, 26 g of trimethylolpropanethoxylatetriacrylate (TMPEOTA) that acts as a crosslinking agent, 27.5 g of texanol that acts as an organic solvent, 5 g of benzophenon that acts as a photoinitiator, and 2.5 g of dioctylphthalate (DOP) that acts as a plasticizer were mixed. The obtained mixture was uniformly mixed and dispersed using a 3-roll mill. As a result, a hybrid composite composition was prepared.

### (2) Preparation of Electron Emitter

The hybrid composite composition was used as an ink and ejected using a commercially available piezo-type inkjet printer including a single nozzle on a borosilicate glass substrate such that the ejected hybrid composite composition coating layer has a width of 20µm, a coating thickness of 3µm, and a length of 2 inch. Subsequently, the ejected hybrid composite composition coating layer was sintered using an electric furnace at 400°C for 30 minutes. As a result, an electron emitter was prepared.

### Examples 2 through 5: Preparation of Electron Emitter

Hybrid composite compositions were prepared in the same manner as in Example 1, except that the amounts of the carbide-derived carbon, carbon nanotube, and the remaining additives according to Table 1 were used, and at this time, the ratios of the additives were the same as in Example 1.

Electron emitters were prepared in the same manner as in Example 1, except that the hybrid composite compositions obtained were used.

**Table 1**

| | wt% | | |
|---|---|---|---|
| | Carbide-Derived Carbon | Carbon Nanotube | Additives |
| Example 1 | 0.5 | 1.0 | 98.5 |
| Example 2 | 0.5 | 0.5 | 99 |
| Example 3 | 2 | 1 | 97 |
| Example 4 | 4 | 0.04 | 95.96 |
| Example 5 | 4 | 0.004 | 95.996 |

### Comparative Example 1: Preparation of Electron Emitter

A hybrid composite composition was prepared in the same manner as in Example 1, except that the carbide-derived carbon was not used.

An electron emitter was prepared in the same manner as in Example 1, except that the hybrid composite composition obtained was used.

### Comparative Example 2: Preparation of Electron Emitter

A hybrid composite composition was prepared in the same manner as in Example 1, except that 4.5 wt% of an active carbon powder having a 325 mesh size prepared using a coconut shell (the size of 44 µm or less) was used instead of the carbide-derived carbon, and 0.004 wt% of carbon nanotube was used.

An electron emitter was prepared in the same manner as in Example 1, except that the hybrid composite composition obtained was used.

### Example 6: Manufacturing of Electron Emission Device

An electron emission device was manufactured using the electron emitter obtained according to Example 1 as a cold cathode, a 100µm-thick polyethyleneterephthalate film as a spacer, and a copper plate as an anode. FIG 9 is a light emitting image of the electron emission device obtained.

Also, electron emission devices were manufactured using the electron emitters obtained according to Examples 2 to 5 and Comparative Examples 1 and 2 in thesame manner as described above.

### Electron Emission Device Performance Test

### (1) Current Density with respect to Field

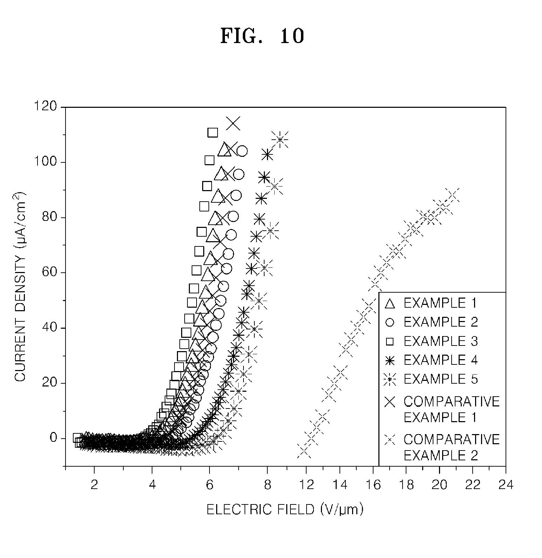

An emission current density of each of the electron emission devices was measured by applying a pulse voltage with 1/500 duty ratio. The results are shown in FIG. 10 and Table 2.

### (2) Lifetime of Electron Emission Device

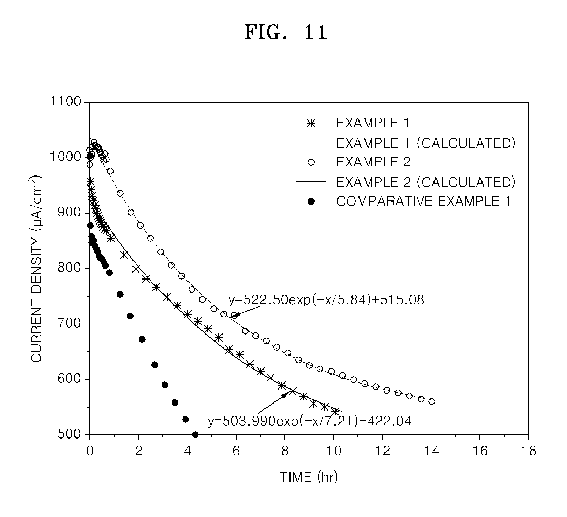

A half-life of the current density of each of the electron emission devices with respect to time was measured in such condition that a voltage was maintained to emit 1 mA/cm² of the current density, and thus, accelerated lifetimes of the electron emission devices were compared each other. Such a lifetime measurement condition is a very harsh condition, and in fact, an electron emission device can have desired brightness even with the current density of a few µA/cm². Although the lifetime of an electron emission device cannot be exactly expected since an accelerated coefficient with respect to the lifetime of CNT is not known until now, lifetimes of electron emission devices including the electron emitter prepared according to Examples 1 to 5 and Comparative Examples 1 and 2 can be compared each other using the measurement method as described above. However, the lifetimes of the electron emission devices prepared according to Examples 4, 5, and Comparative Example 2 could not be measured. The measurement results and extrapolated results (measured value) are shown in Table 2 and FIG. 11. The lifetime was decreased according to a primary exponential function, and equations of the function are illustrated in FIG. 11. R square values with respect to Example 1 and Example 2 were 0.9962 and 0.9898, respectively, and thus, it is identified that actually measured results are the same as the extrapolated results.

### (3) Uniformity of Pixels

Triod-structured emission devices in which pixels can operate were manufactured. In the triod-structured emission devices, 2" cathodes prepared by injecting the electron emitter forming compositions prepared according to Examples 1 to 5 and Comparative Example 1 and 2 were separated from 2" anodes coated with a white blending phosphor in a distance of 10 mm. When a voltage (Va = 4kV, Vs =100V) was applied to the triode-structured emission devices manufactured and the current density reached about 60µA, a degree of dispersion of brightnesses of each of 5 areas was measured/calculated, and an average value of the degrees of dispersion of five areas was used to assess the uniformity of pixels. The obtained results are shown in Table 2.

**Table 2**

| | Amount | | Test Results | | | Uniformity of pixels | |
|---|---|---|---|---|---|---|---|
| | CDC* | CNT** | Turn-on Field (V/µm) | Field Emission Characteristics | Lifetime (Time) | a-PU | p-PU |
| Example 1 | 0.5 | 1.0 | 4.12 | 100µA/cm² @6.45 V/µm | 36.72 | 92.5 | 69.9 |
| Example 2 | 0.5 | 0.5 | 4.65 | 100µA/cm² @ 7.05 V/µm | 43.64 | 91.4 | 66.4 |
| Example 3 | 2 | 1 | 3.85 | 100µA/cm² @ 6.01 V/µm | 40.18 | 89.4 | 65.8 |
| Example 4 | 4 | 0.04 | 5.45 | 100µA/cm² @ 7.95V/µm | Not measurable | 91.8 | 71.3 |
| Example 5 | 4 | 0.004 | 6.25 | 100µA/cm² @ 8.31 V/cm² | Not measurable | 92.8 | 72.7 |
| Comparative Example 1 | 0 | 1.0 | 4.45 | 100µA/cm² @ 6.68 V/µm | 4.35 | 87.4 | 61.5 |
| Comparative Example 2 | 4.5 | 0.004 (Active Carbon) | 12.5 | 100µA/cm² @ 22.02 V/µm | Not measurable | - | - |

| | | | | | | | |
|---|---|---|---|---|---|---|---|
| CDC*: carbide-derived carbon CNT**: carbon nanotube | | | | | | | |

Referring to Table 2, an electron emission device manufactured using a hybrid composite of a carbon nanotube and a carbide-derived carbon showed a lifetime 1000% greater than when a carbon nanotube was used alone or other carbonaceous material was used. In addition, the electron emission device according to the present invention showed excellent pixel uniformity compared to the electron emission devices prepared according to Comparative Examples 1 and 2. Furthermore, the electron emission device according to the present invention had a turn-on filed of about 3.85 - 6.25 V/µm and an excellent field emission characteristic of 100 µA/cm² at about 6.01 - 8.31 V/µm.

According to the present invention, dispersibility of an electron emitter is improved, and processiblity of an electron emission device is improved. In addition, an electron emission device according to the present invention has an excellent field emission performance, improved uniformity, and improved lifetime, and can be used as a backlight unit (BLU) of a flat panel display.

## Claims

1. A hybrid composite comprising:
a carbon nanotube; and
a carbide-derived carbon prepared by thermochemically reacting a carbide compound with a halogen or a halogen compound containing gas so as to extract the elements of the carbide except carbon, wherein a weight ratio of the carbon nanotube with respect to the carbide-derived carbon in the hybrid composite is in the range from 0.0001 to 5.

2. The hybrid composite of claim 1, wherein the carbide compound comprises at least one carbide compound selected from the group consisting of silicon carbide (Si-C), boron carbide (B-C), titanium carbide (Ti-C), zirconium carbide (Zr-C), aluminum carbide (Al-C), potassium carbide (Ca-C), titanium-tantalum carbide (Ti-Ta-C), molybdeum-tungsten carbide(Mo-W-C), titanium carbonitride (Ti-C-N), and zirconium carbonitride (Zr-C-N).

3. The hybrid composite of claim 2, wherein the carbide compound comprises at least one carbide compound selected from the group consisting of the silicon carbide, the boron carbide, and the aluminium carbide.

4. The hybrid composite of claim 1, wherein in a Raman spectrum of the carbide-derived carbon (obtained under Raman spectrum analysis conditions: Ar 514.5 nm, 2mW, 60 sec (2 times), 50x), the intensity ratio of a disordered-induced D band at 1350 cm⁻¹ to a graphite G band at 1590 cm⁻¹ is in the range from 0.2 to 5.

5. The hybrid composite of claim 1, wherein the carbide-derived carbon material has a specific surface area of 500 to 1400 m²/g.

6. The hybrid composite of claim 1, wherein in an X-ray diffraction spectrum of the carbide-derived carbon, a weak peak of a graphite (002) surface is present at 2θ = 25°.

7. The hybrid composite of claim 1, wherein in a transmission electron microscopic (TEM) image of the carbide-derived carbon, the electron diffraction pattern of the carbide-derived carbon is a halo-pattern of an amorphous carbon.

8. The hybrid composite of any of the preceding claims, wherein the composite further comprises a binder, wherein the binder is a copolymer of a carboxylic group-containing monomer and at least one ethylene-containing unsaturated monomer and wherein the carboxylic group-containing monomer is at least one material selected from the group consisting of an acrylic acid, a methacrylic acid, a fumaric acid, a maleic acid, vinyl acetic acid, and anhydrides thereof; and an ethylene-containing unsaturated monomer is at least one material selected from the group consisting of methylacrylate, methylmethacrylate, ethylacrylate, ethylmethacrylate, butylacrylate, butylmethacrylate, 2-hydroxyethylacrylate, 2-hydroxyethylmethacrylate, ethyleneglycolmonomethyletheracrylate, ethyleneglycolmonomethylethermethacrylate, glycidylmethacrylate, 3,4-epoxycyclohexylmethylmethacrylate, and 3,4-epoxycyclohexylmethylacrylate.

9. A method of preparing an electron emitter on a substrate, the method comprising:
preparing a hybrid composite composition by stirring a carbon nanotube, a carbide-derived carbon prepared by thermochemically reacting a carbide compound with a halogen or a halogen compound containing gas so as to extract the elements of the carbide except carbon, and a binder, wherein a weight ratio of the carbon nanotube with respect to the carbide-derived carbon in the hybrid composite is in the range from 0.0001 to 5;
ejecting the hybrid composite composition on a substrate; and
sintering the substrate including the ejected hybrid composite composition to prepare the electron emitter.

10. The method of claim 9, wherein the binder is a copolymer of a carboxylic group-containing monomer and at least one ethylene-containing unsaturated monomer.

11. The method of any of claim 10, wherein the carboxylic group-containing monomer is at least one material selected from the group consisting of an acrylic acid, a methacrylic acid, a fumaric acid, a maleic acid, vinyl acetic acid, and anhydrides thereof; and an ethylene-containing unsaturated monomer is at least one material selected from the group consisting of methylacrylate, methylmethacrylate, ethylacrylate, ethylmethacrylate, butylacrylate, butylmethacrylate, 2-hydroxyethylacrylate, 2-hydroxyethylmethacrylate, ethyleneglycolmonomethyletheracrylate, ethyleneglycolmonomethylethermethacrylate, glycidylmethacrylate, 3,4-epoxycyclohexylmethylmethacrylate, and 3,4-epoxycyclohexylmethylacrylate.

12. The method of any of claims 9 to 11, wherein an amount of the binder is in the range from 5 to 40 wt% with respect to the total amount of the hybrid composite composition.

13. The method of any of claims 9 to 12, wherein the binder is crosslinked by a crosslinking agent selected from the group consisting of diacrylates, triacrylates, tetraacylates, and hexaacrylates.

14. The method of any of claims 9 to 13, wherein the hybrid composite composition contains the monomers of the binder, respectively the crosslinking agent, and the monomers are copolymerized, respectively crosslinked by the crosslinking agent, to prepare the binder.

15. The method of claim 14, wherein the hybrid composite composition further comprises a photoinitiator selected from the group consisting of benzophenone, methyl o-benzoylbenzoate, 4,4-bis(dimethylamino)benzophenon, 4,4-bis(diethylamino)benzophenon, 2,2-diethoxyacetophenon, 2,2-dimethoxy-2-phenylacetophenon, 2-methyl-[4-(methylthio)phenyl]-2-morpholinopropan-1-on, 2-benzyl-2-dimethylamino-1 -(4-morpholinophenyl)-1-butanon, bis(2,6-dimethoxybenzoyl)-2,4,4-trimethylpentylphosphineoxide, and bis(2,4,6-trimethylbenzoyl)phenylphosphineoxide.

16. The method of any of claims 9 to 15, wherein the hybrid composite composition further comprises an organic solvent selected from the group consisting of ethylcarbitol, butylcarbitol, ethylcarbitolacetate, butylcarbitolacetate, texanol, terpene oil, dipropyleneglycolmethylether, dipropyleneglycolethylether, dipropyleneglycolmonomethyletheracetate, γ-butyrolactone, cellosolveacetate, butylcellosolveacetate, and tripropyleneglycol.

17. An electron emitter prepared according to the method of any of claims 9 through 16 or consisting of a hybrid composite according to any of claims 1 through 8.

18. The electron emitter of claim 17, where the electron emitter is an electron emitter for a cold cathode.

19. An electron emission device comprising the electron emitter of claims 17 or 18.
